# EUROPEAN PATENT APPLICATION

(11) **EP 4 745 030 A1**
(43) Date of publication of application: **20.05.2026**
(21) Application number: 24275131.1
(22) Date of filing: 19.11.2024
(51) Int. Cl.: B64C 9/00, B63H 25/38, B64C 23/06, B64C 5/02

(54) **IMPROVED TWIN RUDDER ARRANGEMENT**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

There is provided a twin rudder arrangement (300) for a craft (250). The twin rudder arrangement (300) comprises a first rudder blade (310) and a second rudder blade (320), wherein the first rudder blade (310) and the second rudder blade (320) are configured to be provided at either side of a propeller (200) of the craft (250). At least part of the first rudder blade (310) or the second rudder blade (320) comprises a vortex generator arrangement (400), wherein the vortex generator arrangement (400) is arranged to induce vortices in fluid flow passing/interacting with the twin rudder arrangement (300). Also provided is an aircraft or watercraft comprising at least one twin rudder arrangement (300).

## Description

### FIELD

The present disclosure relates to steering arrangements for crafts. Specifically, the disclosure relates to twin rudder arrangements for crafts.

### BACKGROUND

Craft, including aircraft and watercraft, comprise components which are exposed to, or make use of, fluid flows. Certain components are configured to interact with, including guide, the fluid flows to facilitate or improve the production of thrust or lift. Increasing or maintaining the magnitude of thrust or lift produced, whilst using an equivalent or lower quantity of fuel, is important in reducing carbon emissions. Thus, techniques for improving fluid interaction with craft components are of interest in the field.

The interaction of craft components with fluid flows results in a region of disturbed flow (often turbulent) downstream of the craft, known as a wake. Often, craft must maintain a safe distance so as not to be disturbed by the wake. Techniques for reducing or otherwise influencing the wake are of interest in the field. For example, twin rudder arrangements, have been employed. These use two rudder blades around a propeller in order to generate improved thrust, reduce resistance and improve propellor wakes.

The interaction of craft components with fluid flows results in noise. Techniques for reducing or otherwise influencing the noise are of interest in the field, for example to reduce disturbance to aquatic life in the field of watercraft, or to reduce environmental noise in the field of aircraft.

It is an object of the present invention to provide an improved and/or method thereof and/or address one or more of the problems discussed above, or discussed elsewhere, or to at least provide an alternative arrangement.

### SUMMARY

According to a first aspect, there is provided a twin rudder arrangement for a craft, the twin rudder arrangement comprising:
a first rudder blade and a second rudder blade, wherein the first rudder blade and second rudder blade are configured to be provided at either side of a propeller of the craft;
wherein the first rudder blade and second rudder blade are rotatable around the propeller about a single common axis.

The provision of the first rudder blade and the second rudder blade being rotatable about a single common axis allows for the span of rotation to be increased. This means that powering performance of the craft may be improved by increasing interaction of the twin rudder arrangement with the propeller. Additionally, this can aid to improve the suitability of a craft to its conditions in use, for example by improving stability and performance.

Further advantageously, the twin rudder arrangement may provide for improved power efficiency in use, since the magnitude of thrust or lift may be greater when rotation is about a single common axis, whilst having overall lower power requirements.

In examples, the first rudder blade and second rudder blade are unitarily rotatable about the single common axis.

Unitary rotation of the first rudder blade and the second rudder blade means that the twin rudder arrangement may be simplified whilst not compromising and improving the thrust or lift generated by a propeller in use.

In examples, a drive system operable to cause rotation of the first rudder blade and second rudder blade around the propeller about the single common axis is provided.

The drive system may provide for suitable rotation of the first and second rudder blades about the single common axis. By providing a drive system, the movement may be highly controllable.

In examples, the first rudder blade and second rudder blade are connected by a connecting element extending therebetween.

The connecting element may provide for an arrangement that it suitably spaced and dimensioned around a propeller of a craft. A connecting element connecting the first and second rudder blades may mean that the first and second rudder blades are movable through the connecting element. As such, the twin rudder arrangement may be more compact, while still being highly controllable
In examples, the drive system comprises a drive shaft connected to the connecting element and is operable to cause rotation of the first rudder blade and second rudder blade through the connecting element.

The drive shaft being connected to the connecting element means that rotation of the connecting element causes movement of the first rudder blade and the second rudder blade. In use, this may generate improved thrust and reduced resistance, thereby also improving the propeller wakes.

In examples, the drive shaft is aerodynamically or hydrodynamically shaped.

This means that the flow of a fluid about the drive shaft may have reduced resistance, thereby reducing drag in use.

In examples, each of the first and second rudder blades are elongate and comprise a proximal end and a distal end.

By providing elongate first and second rudder blades the twin rudder arrangement may be provided around a propellor of a craft rather than in the traditional arrangement of a rudder in a slipstream of a propeller. This means that fuel efficiency and reduced emissions may be provided by the twin rudder arrangement acting as a steering arrangement around a propeller.

In examples, each of the first and second rudder blades are connected at their respective proximal ends by the connecting element extending therebetween.

A connecting element extending between respective proximal ends of the first and second rudder blades may at least allow for unitary movement such that the twin rudder arrangement may be simplified. Additionally, the connecting element may be shaped such that aerodynamics or hydrodynamics of the twin rudder arrangement may be improved.

In examples, wherein a terminal portion towards the distal end of one or both of the first and second rudder blades is angled towards the opposite one of the first and second rudder blade.

The terminal portions may be angled so as to act as brake portions and improve the aerodynamics or hydrodynamics of the twin rudder arrangement such that improved thrust and reduced resistance may be provided by the twin rudder arrangement.

In examples, the distal end of the first rudder blade is spaced apart from the distal end of the second rudder blade.

Spacing the distal ends of the first rudder blade the second rudder blade may allow for a propeller to be positioned therebetween without compromising thrust generated by the propeller and improving propeller wakes.

In examples, each of the first and second rudder blades comprises a leading edge and a trailing edge; wherein the surface between the leading edge and the trailing edge is substantially flat in the direction between the leading edge and the trailing edge.

The provision of a substantially flat surface in the direction between the means that the first and second rudder blades have optimal aerodynamic or hydrodynamic properties such that drag is reduced and fluid interaction with the first and second rudder blades is improved.

In examples, at least one or both of the first or second rudder blades comprises a vortex generator arrangement on a surface thereof.

Providing a vortex generator arrangement may advantageously provide for improved disruption of fluid flow of the first and second rudder blades without reducing efficiency. In combination with the first and second rudder blades that are rotatable about a single common axis, the twin rudder arrangement may provide for efficient manoeuvrability, particularly at higher rudder rotation angles.

In examples, the vortex generator arrangement is provided on the leading edge of the one or both first or second rudder blades.

By providing the vortex generator arrangement on the leading edges of one or both of the first or second rudder blades, the disruption of fluid flow may be optimised. This means that increased thrust production for equivalent energy input may be provided by the twin rudder arrangement.

In examples, the vortex generator arrangement comprises a series of projections.

The provision of a vortex generator arrangement on the twin rudder arrangement may create corresponding vortices in a fluid flow interacting with the twin rudder arrangement, such that thrust production may be increased.

According to a second aspect, there is provided a twin rudder arrangement for a craft, the twin rudder arrangement comprising:
a first rudder blade and a second rudder blade, wherein the first rudder blade and the second rudder blade are configured to be provided at either side of a propeller of the craft;
wherein at least part of the first rudder blade or the second rudder blade comprises a vortex generator arrangement, wherein the vortex generator arrangement is arranged to induce vortices in fluid flow interacting with the twin rudder arrangement.

The provision of a vortex generator arrangement on one or both of the first rudder blade and the second rudder blade, wherein the vortex generator arrangement is arranged to induce vortices in fluid flow interacting with the twin rudder arrangement means that disruption of fluid flow may be improved without reducing efficiency. Further, the thrust generated by the twin rudder arrangement may be improved whilst also reducing noise to reduce disturbance to aquatic life in the field of watercraft, or environmental noise in the field of aircraft. Further, flow separation on the outer surface of the first and second rudder blades may be is reduced when compared with rudder arrangements without a vortex generator surface, which results in increased thrust production for equivalent energy input. This provides for a more efficient propulsion unit, control of a turbulent wake, and a reduction in downstream vorticity.

In examples, the vortex generator arrangement comprises a series of projections.

By providing a series of projections in the vortex generator arrangement, aids in the reduction in the vorticity magnitude of the wake produced by the interaction of the twin rudder arrangement with the fluid flow, thereby improving noise.

In examples, the projections are spatially separated to thereby induce a plurality of spatially separated vortices in the fluid flow about the twin rudder arrangement.

Providing spatially separated projections may produce even and regular vortices in the fluid flow, which may disrupt fluid flow in a regular manner thereby reducing drag and improving lift.

In examples, the vortex generator arrangement is provided on both of the first rudder blade and the second rudder blade.

Providing a vortex generator arrangement on both of the first rudder blade and the second rudder blade may increase the effect of the vortex generator arrangement across the whole twin rudder arrangement, thereby optimizing the advantageous effects of the vortex generator arrangement.

In examples, the vortex generator arrangement is symmetrically provided on both of the first rudder blade and the second rudder blade.

Symmetrically providing a vortex generator arrangement on both of the first rudder blade and the second rudder blade may mean that the maneuverability and steering capabilities of the twin rudder arrangement are improved.

In examples, the vortex generator arrangement is provided on at least part of the leading edge of one or both of the first or second rudder blades.

By providing a vortex generator arrangement on a leading edge of one or both of the first or second rudder blades may at least mean that flow separation on the outer surface of the first and second rudder blades may be reduced. This means that the twin rudder arrangement may be more efficient.

In examples, the vortex generator arrangement is provided on at least part of the trailing edge of one or both of the first or second rudder blades.

Providing a vortex generator arrangement on the trailing edge may suitably reduce noise in the wake.

In examples, a terminal portion towards the distal end of one or both of the first and second rudder blades is absent a vortex generator arrangement.

The provision of a distal end of one or both of the first and second rudder blades being absent a vortex generator arrangement may improve aerodynamics or hydrodynamics of the twin rudder arrangement.

In examples, the vortex generator arrangement is provided on a linear region of one or both of the first and second rudder blades.

Providing vortex generator arrangement on a linear region of one or both of the first and second rudder blades may allow for improved disruption of fluid flow without reducing efficiency.

In examples, the vortex generator arrangement is attached to, supported by, and/or integrally formed with the first rudder blade and/or the second rudder blade.

Integrally forming the vortex generator arrangement may mean that the vortex generator arrangement on the twin rudder arrangement is more robust. Attaching a vortex generator arrangement, or supporting a vortex generator arrangement, on the twin rudder arrangement proves for the option of improving performance of existing rudder arrangements by, e.g. retrofitting, a vortex generator arrangement on an existing twin rudder arrangement.

In examples, the first rudder blade and second rudder blade are rotatable around the propeller about a single common axis.

Providing first rudder blade and second rudder blade are rotatable around the propeller about a single common axis results in more efficient manoeuvrability, particularly at higher rudder angles where conventional designs tend to experience flow separation and turbulence. By preventing flow separation using a vortex generator arrangement, cavitation-induced vibrations and potential structural damage may be minimised, thereby extending the lifespan of the twin rudder arrangement.

In examples, the twin rudder arrangement further comprises a drive system operable to cause rotation of the first rudder blade and second rudder blade around the propeller about the single common axis.

By providing a drive system, the rotation of the twin rudder may be highly controllable.

In examples, in use, the vortex generator arrangement is brought into the flow through the propeller, by rotation of the first rudder blade and second rudder blade, to generate vortices in said flow.

By rotating the first rudder blade and the second rudder blade to be brought into the flow through the propeller, flow separation and turbulence may be reduced in the flow through the propeller. This may also reduce noise and provide for a more efficient arrangement.

In examples, the first rudder blade and second rudder blade are connected by a connecting element extending therebetween.

The provision of a connecting element means that the first and second rudder blades may be unitarily moveable and/or the twin rudder arrangement may be more compact. As such, more than one twin rudder arrangement may be provided and a craft which increases the advantageous affects.

According to a third aspect, an aircraft or watercraft is provided that comprises at least one twin rudder arrangement of the first aspect and/or the second aspect.

As such, a craft having some or all of the advantageous effects described with respect to the first and/or second aspect may be provided.

It will be appreciated that features of the first, second and third aspects may be combined in various combinations.

### BRIEF DESCRIPTION OF THE FIGURES

Embodiments of the invention will now be described by way of example only with reference to the figures, in which:
Figure 1 shows a rear view of a twin rudder arrangement provided around a propeller of a craft;
Figure 2 shows a top view of a twin rudder arrangement in a rotated and straight position;
Figure 3 shows a perspective view of two twin rudder arrangements provided around respective propellers of a craft;
Figure 4 shows a perspective view of a twin rudder arrangement, with propeller absent;
Figure 5 shows a side view of a twin rudder arrangement provided around a propeller of a craft.

### DETAILED DESCRIPTION

In brief overview, a twin rudder arrangement for a craft may be provided. The twin rudder arrangement comprises a first rudder blade and a second rudder blade. The first rudder blade and second rudder blade are configured to be provided at either side of a propeller of the craft. In examples, the first rudder blade and second rudder blade are rotatable around the propeller about a single common axis. In examples, at least part of the first rudder blade or the second rudder blade comprises a vortex generator arrangement; the vortex generator arrangement is arranged to induce vortices in fluid flow interacting with the twin rudder arrangement.

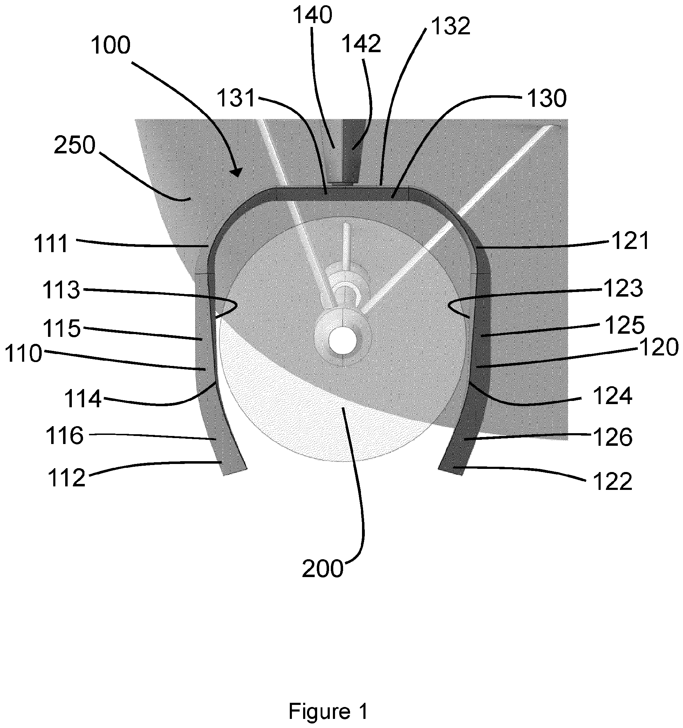

Fig. 1 shows a twin rudder arrangement 100 provided around a propeller 200 of a craft 250. The twin rudder arrangement 100 may also be called a "single axis twin rudder system". The propeller 200 may be connected to, or connectable to, the body of a craft 250. In use, the twin rudder arrangement is brought into a fluid flow through the propeller, such that the twin rudder arrangement interacts with the fluid flow.

The twin rudder arrangement 100 comprises a first rudder blade 110 and a second rudder blade 120. The first rudder blade 110 and the second rudder blade 120 are arranged on either side of the propeller 200. That is, the first rudder blade 110 and the second rudder blade 120 are arranged on opposing sides of the propeller 200 when the propeller 200 is viewed from the front. The first rudder blade 110 and the second rudder blade 120 may be of the same length.

The first rudder blade 110 and the second rudder blade 120 may be connected by a connecting element 130. In use, the connecting element 130 is provided adjacent to the edge of the propeller 120 closest to the body of the craft 250.

The first rudder blade 110 may comprise a proximal end 111 and a distal end 112. The first rudder blade 110 is elongate. That is, the first rudder blade 110 is longer in a direction between the proximal end 111 and the distal end 112 than in a perpendicular direction.

The first rudder blade 110 may comprise a leading edge 113 and a trailing edge 114. In use, the leading edge 113 is a frontward edge and the trailing edge 114 is a rearward edge, i.e. the trailing edge 114 is provided downstream of the leading edge 113.

The first rudder blade 110 may comprise a body portion 115 that extends between the leading edge 113 and the trailing edge 114. The body portion 115 may be substantially flat or planar in the direction between the leading edge 113 and the trailing edge 114. In examples, the body portion 115 may have a surface that is cambered, i.e. slightly convex on one or more surfaces in the direction between the leading edge 113 and the trailing edge 114.

The second rudder blade 120 may comprise a proximal end 121, a distal end 122, a leading edge 123, a trailing edge 124, a body portion 125 and a terminal portion 126. Each of these may correspond to the corresponding features of the first rudder blade 110.

The second rudder blade 120 may be configured to be provided on the opposite side of the propeller 200 to the first blade 110. The second rudder blade 120 may provided to be identical or as a mirror image of the first rudder blade 110. The second rudder blade 120 may be a nonsuperimposable mirror image of the first rudder blade 110. All description of the first rudder blade 110 applies equally to the second rudder blade 120.

The first rudder blade 110 may comprise a terminal portion 116 towards its distal end 112. The terminal portion 116 may be angled inwardly towards the second rudder blade 120. The terminal portion 116 may be angled towards a corresponding terminal portion 126 of the second rudder blade 120. The terminal portion 126 may be correspondingly angled towards the terminal portion 116 of the first rudder blade 110. The distal end 112 of the first rudder blade 110 is spaced apart from the distal end 122 of the second rudder blade 120.

In use, each of the terminal portions 116, 126 may be angled towards the propeller 200. The remainder of the length of each of the first rudder blade 110 and second rudder blade 120 may be substantially straight. This may be referred to as the linear region each of the first and second rudder blades 110, 120. Corresponding linear regions may be provided on the edges of the first and second rudder blades 110, 120. Advantageously, the angled terminal portions 116, 126 may provide improved aerodynamics or hydrodynamics of the twin rudder arrangement 100. The angled terminal portions 116, 126 may act as brake portions.

The terminal portion 116 may comprise a quarter of the length of the first rudder blade 110 toward the distal end 112. In examples, the terminal portion 116 may comprise more or less than a quarter of the length of the first rudder blade 110. The terminal portion 216 of the second rudder blade 120 may be of the same or different length to the terminal portion 116 of the first rudder blade 110. In examples, the terminal portions 116, 126 may be tapered towards the distal ends 112, 122. This may further improve the hydrodynamic properties of the twin rudder arrangement 100.

Each of the first rudder blade 110 and the second rudder blade 120 may be connected at their respective proximal ends 111, 121 to the connecting element 130. The connecting element 130 acts as a bridge portion such that the first rudder blade 110 and the second rudder blade 120 may be arranged on either side of a propeller 200. The bridge portion may extend over (i.e., above) the propeller, thereby simplifying construction and access to arrangement for rotation thereof. In examples, the first rudder blade 110 and the second rudder blade 120 may be symmetrically arranged on the connecting element 130. In examples, the first rudder blade 110 and the second rudder blade 120 may be symmetrically arranged on either side of the propeller 200.

The connecting element 130 may have a body portion 131 that extends between the proximal ends 111, 121 of the first and second rudder blades 110, 120. The body portion 131 has an uppermost surface 132 which is the surface that faces the body of a craft 250 in use.

In examples, the body portion 131 may be substantially flat, or planar. In examples, the body portion 131 of the connecting element 130 may be curved at its uppermost point. In examples, the body portion 131 may be substantially flat, but its uppermost surface 132 may be curved upwardly, i.e. towards the body of a craft 250. In examples, the width of the body portion 131 of the connecting element 130 may be wider than the width of the first or second rudder blades 110, 120. Advantageously, this provides for improved aerodynamics or hydrodynamics of the twin rudder arrangement 100.

The first rudder blade 110 and the second rudder blade 120 may be fixedly connected to the connecting element 130. That is, the first rudder blade 110 and second rudder blade 120 may be rigidly connected such that movement of the connecting element 130 directly causes movement of the first rudder blade 110 and the second rudder blade 120. This means that, in examples, the first rudder blade 110 and the second rudder blade 120 may be unitarily movable.

A drive system 140 may be provided. The drive system 140 is operable to cause rotation of the first rudder blade 110 and the second rudder blade 120.

The drive system 140 may comprise a drive shaft 142. The drive shaft 142 is connected to the connecting element 130. The drive shaft 142 may be connected centrally on the uppermost surface 132 of the connecting portion. As such, the drive shaft 142 may be operable to cause movement of the connecting element 130 and, in turn, the first rudder blade 110 and the second rudder blade 120. The resultant movement of the first rudder blade 110 and the second rudder blade 120 may be about a single common axis, i.e. in line with, or along, the axis defined by the drive shaft 142.

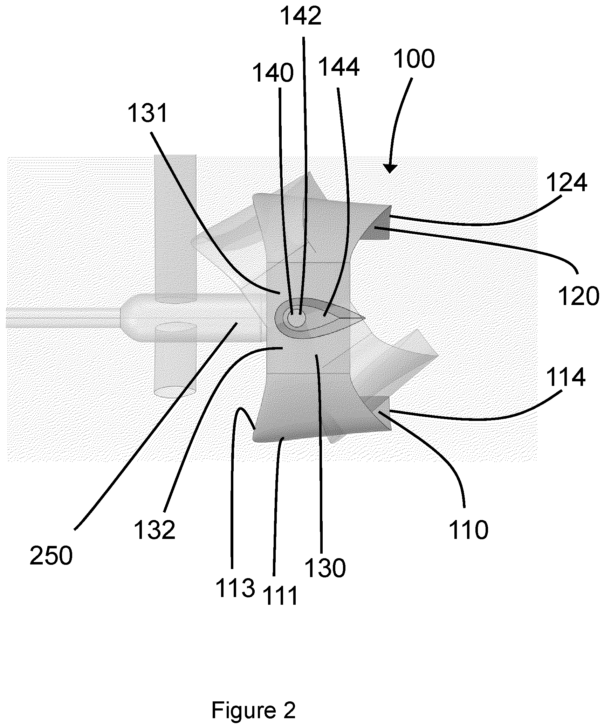

The drive shaft 142 may comprise an aerodynamically/hydrodynamically shaped sleeve 144. As such, the drive shaft 142 may be aerodynamically/hydrodynamically shaped. This is shown in Figure 2. This means that the flow of a fluid about the drive shaft 142 may have reduced resistance. The sleeve 144 may comprise a tapered portion. In examples, the drive shaft 142 and/or sleeve 144 may be narrower at a part that is downstream in use. In examples, the drive shaft 142 may comprise a tapered lateral cross section. Advantageously, this may reduce drag in use.

In use, the drive system 140 causes rotation of the first rudder blade 110 and the second rudder blade 120. The drive shaft 142 that is connected to the connecting element 130 is operable to cause movement of the connecting element 130. In response, the first rudder blade 110 and the second rudder blade 120 that are connected to the connecting element 130 also rotate. In examples, the first rudder blade 110 and the second rudder blade 120 may move together, i.e. be unitarily movable. Advantageously, this provides for a simplified design and production, whilst maintaining or improving the thrust or lift generated by the propeller 200.

Advantageously, the first rudder blade 110 and the second rudder blade 120 act as a controllable steering arrangement but also act as an accelerating ducted propeller system. This means that the twin rudder arrangement 100 is able to generate improved thrust and reduced resistance. This also improves the propeller wakes. Further advantageously, the twin rudder arrangement 100 may provide for improved power efficiency in use, since the magnitude of thrust or lift may be greater, whilst having overall lower power requirements.

In use, the drive shaft 142 may be operable to cause rotation of the connecting element 130, the first rudder blade 110 and the second rudder blade 120 of between +35 degrees and -35 degrees. The range of movement is illustrated in Figure 2 which shows the twin rudder arrangement 100 in a rotated position and a straight position about the propeller 200.

Due to the provision of a single drive system 140 and drive shaft 142 that is operable to control both of the first rudder blade 110 and the second rudder blade 120, the first rudder blade 110 and the second rudder blade 120 are rotatable about a single common axis.

It will be appreciated that advantages of the invention can be realised by provision of the first rudder blade 110 and second rudder blade 120 arranged in the described manner, and absent the drive system 140 or drive shaft 142. For example, the rudder blades 110, 120 may nevertheless be rotatable about a single common axis due to their relative arrangement, and may be used in retrofit in an existing (perhaps conventional) rudder arrangement. In this way, the drive system 140 or drive shaft 142 need not necessarily be provided as part of the twin rudder arrangement, and an existing drive system 140 may be utilised for rotation of the rudder blades 110, 120. Advantageously, in this way, performance of existing rudder arrangements may be improved by providing (e.g., retrofitting) the twin rudder arrangement rotatable about the single common axis.

Rotation of the first rudder blade 110 and the second rudder blade 120 about a single common axis allows for the uppermost span of the connecting portion 130 to be significantly increased. Advantageously, this means that the powering performance of the craft may be improved by increasing interaction of the twin rudder arrangement 100, the propeller 200 and the craft 250, for example the hull of a watercraft. This may also improve the seakeeping capabilities of the craft 250, i.e. to improve the suitability of the watercraft to its conditions in use. This may be particularly beneficial for mitigating pitch motion in rough sea conditions, resulting in improved stability and performance.

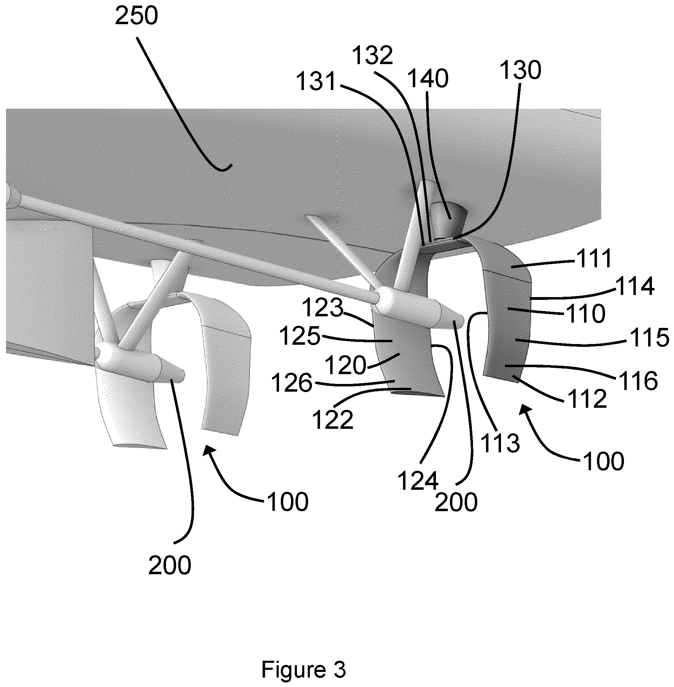

The drive system 140 may be controlled by a control system external to the twin rudder arrangement 100 or a control system that is integral to the twin rudder arrangement. As such, the twin rudder arrangement 100 is a suitable and effective steering arrangement for a craft. By providing a single drive system 140 that is operable to cause movement of both the first rudder blade 110 and the second rudder blade 120 about a single common axis, the twin rudder arrangement 100 may be more compact, while still being highly controllable. This means that more than one shaft may be used on a craft to allow for improved control and propulsion of the craft, as shown in Figure 3.

In examples, the body portion 131 of the connecting portion 130 may comprise a first connecting part and a second connecting part. The first connecting part may be connected to the proximal end 111 of the first rudder blade 110. The second connecting part may be connected to the proximal end 121 of the second rudder blade 120. A single drive system 140 and drive shaft 142 may be connected to the first and second connecting parts such that movement is driven about a single common axis as discussed. For example, the first connecting part may overlap the second connecting part and the drive shaft 132 may be connected to or through each of the first connecting part and the second connecting part.

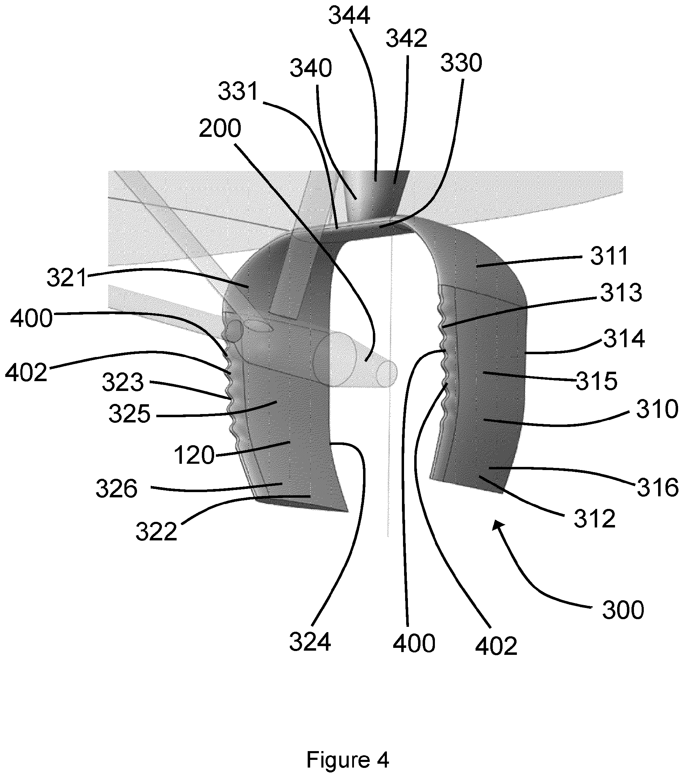

Figure 4 shows a twin rudder arrangement 300 provided around a propeller 200 of a craft 250. The twin rudder arrangement 300 may be substantially as described with respect to the twin rudder arrangement 100 shown in Figures 1 to 3. The twin rudder arrangement may comprise a first rudder blade 310, a second rudder blade 320 and a connecting element 330. In some examples, the twin rudder arrangement 300 may further comprise a drive system 340. In examples, the drive system 340 may be operable to cause rotation of the first rudder blade 310 and the second rudder blade 320.

The twin rudder arrangement 300 comprises a comprises a vortex generator arrangement 400. In use, the vortex generator arrangement 400 is brought into a fluid flow interacting with the twin rudder arrangement and the flow through the propeller to generate vortices in said flow.

The vortex generator arrangement 400 is provided on part of each of the first rudder blade 310 and the second rudder blade 320. In examples, the vortex generator arrangement may be provided on one of the first rudder blade 310 or the second rudder blade 320. In use, the vortex generator arrangement 400 is arranged to induce vortices in fluid flow interacting with the twin rudder arrangement 300.

The vortex generator arrangement 400 may be integrally formed with the first rudder blade 310 and/or the second rudder blade 320. Advantageously, this may allow for a robust arrangement, to minimise potential structural damage. In examples, the vortex generator arrangement 400 may be attached to or supported by the first rudder blade 310 and/or the second rudder blade 320. Advantageously, in these examples, performance of existing rudder arrangements may be improved by providing (e.g., retrofitting) a vortex generator arrangement 400 on an existing twin rudder arrangement. In examples, the vortex generator arrangement 400 may be applied to the twin rudder arrangement 100 as described with reference to Figures 1 to 3.

The vortex generator arrangement 400 may be provided on an edge of the first rudder blade 310 and the second rudder blade 320. In the example shown in Figure 4, vortex generator arrangement 400 may be provided on the leading edges 313, 323 of each of the first and second rudder blades 310, 320. The vortex generator arrangements 400 are provided along part of the length of the leading edge 313, 323.

In examples, vortex generator arrangements 400 may be provided on the trailing edge 314, 324 of the first and second rudder blades 310, 320. In examples, the vortex generator arrangement 400 may be provided on both the leading edges 313, 323 and the trailing edges 314, 324. In examples, the vortex generator arrangement 400 may be symmetrically provided on the leading edges 313, 323 and/or the trailing edges 314, 324. In examples, the vortex generator arrangement 400 may be provided on the leading edge 313 of the first rudder blade 310 and on the trailing edge 324 of the second rudder blade 320, or vice versa. In examples, the vortex generator arrangement 400 may be provided on only one of the first rudder blade 310 or the second rudder blade 320.

In examples, the vortex generator arrangements 400 may be provided on the linearly extending regions of edges of the first and/or second rudder blades 310, 320. In other words, a vortex generator arrangement 400 may not be provided on the terminal portions 316, 326 of the first and second rudder blades 310, 320 towards the distal ends 312, 322. This may advantageously provide for improved disruption of fluid flow without reducing efficiency.

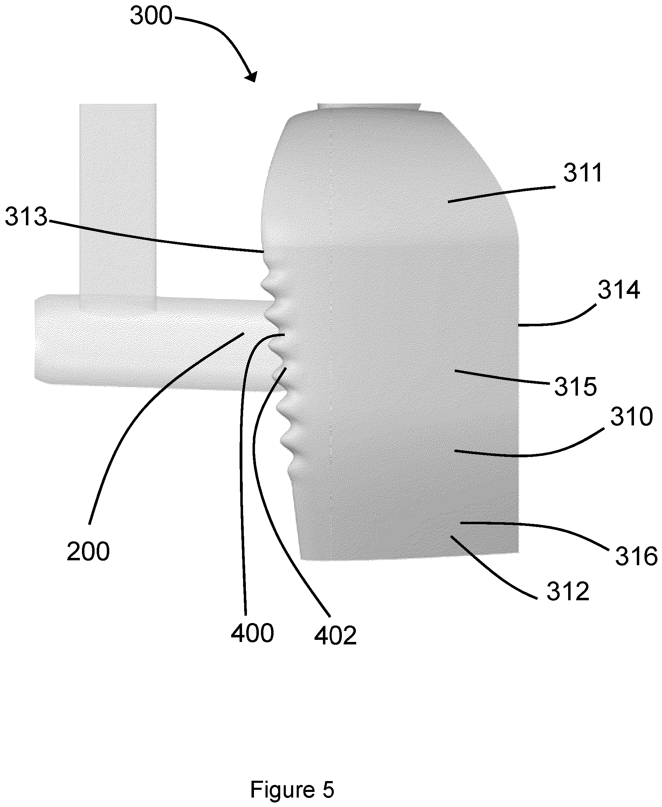

Each vortex generator arrangement 400 may comprise a series, or plurality, of projections 402. This can be seen in Figure 5. The term "projections" is intended to include protrusions, serrations and/or undulations and so on. Each projection 402 may extend outwardly away from the edge on which it is provided. Each projection may have a length in a lateral direction, parallel to the direction in which the edges of the first and second rudder blades 310, 320 extend. This length may be described as a wavelength or portion of a wavelength. Each projection 402 may have and a height in an axial direction, perpendicular to the direction in which the edges of the first and second rudder blades 310, 320 extend. This height may be described as an amplitude. In examples, projections 402 may be provided in a sinusoidal wave pattern. This means that the height and length may be equal. Advantageously, this may produce even and regular vortices in the fluid flow. This may provide for optimum noise reduction.

In use, the vortex generator arrangement 400 may be configured to induce a plurality of periodic, spaced apart vortices in the fluid flow interacting with the twin rudder arrangement 300. Those vortices which correspond to the form of the vortex generator arrangements 400 and the spacing of projections 400. Advantageously, the generation of vortices by the vortex generator arrangement 400 aids in the reduction in the vorticity magnitude of the wake produced by both the interaction of the twin rudder arrangement 300 with the fluid flow and also by the interaction of the propeller 250 arranged between the first and second rudder blades 310, 320. Reduction of the vorticity magnitude may also reduce noise which, in turn, reduces disturbance to aquatic life in the field of watercraft and to environmental noise in the field of aircraft. Additionally, flow separation on the outer surface of the first and second rudder blades 310, 320 may be reduced when compared with rudder arrangements without a vortex generator surface 400. This advantageously results in increased thrust production for equivalent energy input. Overall, this provides for a more efficient propulsion unit, control of the turbulent wake, and a reduction in downstream vorticity.

Advantageously, the vortex generator arrangement 400 may disrupt fluid flow in a controlled manner, reducing drag and improving lift. Especially in combination with the first and second rudder blades 310, 320 that are rotatable about a single common axis, this results in more efficient manoeuvrability, particularly at higher rudder angles where conventional designs tend to experience flow separation and turbulence. By preventing flow separation, the vortex generator arrangement 400 minimises cavitation-induced vibrations and potential structural damage, thereby extending the lifespan of the twin rudder arrangement 300. Such advantages may also apply to twin rudder arrangements which are not rotatable about a single common axis.

Also provided is an aircraft or watercraft comprising at least one twin rudder arrangement 100, 300. As discussed, the twin rudder arrangement may be more compact and so more than one twin rudder arrangement 100, 300 may be provided.

Although a few example embodiments have been shown and described, it will be appreciated by those skilled in the art that various changes and modifications might be made without departing from the scope of the invention, as defined in the appended claims.

Attention is directed to all papers and documents which are filed concurrently with or before this specification in connection with this application and which are open to public inspection with this specification, and the contents of all such papers and documents are incorporated herein by reference.

All the features disclosed in this specification, including any accompanying claims, abstract and drawings, and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent, or similar purpose, unless expressly stated otherwise. Thus, unless expressly stated otherwise, each feature disclosed is one example only of a generic series of equivalent or similar features.

The invention is not restricted to the details of the foregoing embodiments. The invention extends to any novel one, or any novel combination, of the features disclosed in this specification, including any accompanying claims, abstract and drawings, or to any novel one, or any novel combination, of the steps of any method or process so disclosed.

## Claims

1. A twin rudder arrangement for a craft, the twin rudder arrangement comprising:
a first rudder blade and a second rudder blade, wherein the first rudder blade and the second rudder blade are configured to be provided at either side of a propeller of the craft;
wherein at least part of the first rudder blade or the second rudder blade comprises a vortex generator arrangement, wherein the vortex generator arrangement is arranged to induce vortices in fluid flow interacting with the twin rudder arrangement.

2. The twin rudder arrangement of claim 1, wherein the vortex generator arrangement comprises a series of projections.

3. The twin rudder arrangement of claim 2, wherein the projections are spatially separated to thereby induce a plurality of spatially separated vortices in the fluid flow about the twin rudder arrangement.

4. The twin rudder arrangement of any preceding claim, wherein the vortex generator arrangement is provided on both of the first rudder blade and the second rudder blade.

5. The twin rudder arrangement of claim 4, wherein the vortex generator arrangement is symmetrically provided on both of the first rudder blade and the second rudder blade.

6. The twin rudder arrangement of any preceding claim, wherein the vortex generator arrangement is provided on at least part of the leading edge of one or both of the first rudder blade and the second rudder blade.

7. The twin rudder arrangement of any preceding claim, wherein the vortex generator arrangement is provided on at least part of the trailing edge of one or both of the first rudder blade and the second rudder blade.

8. The twin rudder arrangement of any preceding claim, wherein a terminal portion towards the distal end of one or both of the first rudder blade and the second rudder blade is absent a vortex generator arrangement.

9. The twin rudder arrangement of any preceding claim, wherein the vortex generator arrangement is provided on a linear region of one or both of the first rudder blade and the second rudder blade.

10. The twin rudder arrangement of any preceding claim, wherein the vortex generator arrangement is attached to, supported by, and/or integrally formed with the first rudder blade and/or the second rudder blade.

11. The twin rudder arrangement of any preceding claim, wherein the first rudder blade and second rudder blade are rotatable around the propeller about a single common axis.

12. The twin rudder arrangement of claim 11, further comprising a drive system operable to cause rotation of the first rudder blade and second rudder blade around the propeller about the single common axis.

13. The twin rudder arrangement of claim 11 or 12, wherein, in use, the vortex generator arrangement is brought into the flow through the propeller, by rotation of the first rudder blade and second rudder blade, to generate vortices in said flow.

14. The twin rudder arrangement of any preceding claim, wherein the first rudder blade and second rudder blade are connected by a connecting element extending therebetween.

15. An aircraft or watercraft comprising at least one twin rudder arrangement of any preceding claim.
